# EUROPÄISCHE PATENTANMELDUNG

(11) **EP 1 118 807 A2**
(43) Veröffentlichungstag der Anmeldung: **25.07.2001**
(21) Anmeldenummer: 00126390.4
(22) Anmeldetag: 02.12.2000
(51) Int. Cl.: F16L 9/12

(54) **Mehrschichtiges Kunststoffrohr mit guter Schichtenhaftung**

(30) Priorität: 21.01.2000 DE 10002461
(71) Anmelder: Degussa AG, 40474 Düsseldorf (DE)
(72) Erfinder: Häger, Harald, Dr., 45772 Marl (DE); Schmitz, Guido, Dr., 48249 Dülmen (DE); Grosse-Puppendahl, Thomas, 45721 Haltern (DE); Hellermann, Walter, Dr., 46282 Dorsten (DE); Oenbrink, Georg, Dr., 48249 Dülmen (DE)

(57) **Zusammenfassung**

Ein mehrschichtiges Kunststoffrohr, das folgende Schichten enthält:
I. Mindestens eine Schicht aus einer Polyolefin-Formmasse,
II. mindestens eine Schicht aus einer Polyester-Formmasse, die eine oder mehrere Verbindungen enthält, welche ausgewählt sind aus
   a) einer Verbindung mit zwei oder mehr Carbodiimid-Gruppen,
   b) einer Verbindung mit zwei oder mehr Carbonsäureanhydridgruppen,
   c) einer Verbindung mit zwei oder mehr Maleinimidgruppen,
   d) einer Verbindung mit zwei oder mehr Oxazingruppen, sowie
III. mindestens eine zwischen I und II liegende Schicht aus einem Haftvermittler, der reaktive Gruppen enthält,
weist einen festen Schichtenverbund auf.

## Beschreibung

Gegenstand der Erfindung ist ein mehrschichtiges Kunststoffrohr mit einer Polyolefinschicht und einer Sperrschicht aus thermoplastischem Polyester.

Kunststoffrohre aus Polyolefinen, insbesondere aus Polyethylen und Polypropylen, sind bekannt und werden für viele Anwendungen eingesetzt. Um ihre Aufgabe zu erfüllen, müssen die Rohre unter anderem inert gegenüber dem in ihnen fließenden Medium und beständig gegen hohe und tiefe Temperaturen sowie gegenüber mechanischer Belastung sein.

Einschichtige Rohre aus Polyolefin sind für eine Reihe von Anwendungen ungeeignet. So besitzen Polyolefine eine nicht ausreichende Sperrwirkung gegen Kraftstoffe. Dies führt beispielsweise dazu, dass wegen des weiterentwickelten Umweltbewußtseins und der entsprechenden Verschärfung der gesetzlichen Regelungen einschichtige Polyolefinrohre zum Transport von Kraftstoffen, beispielsweise in unterirdisch verlegten Versorgungsleitungen im Tankstellenbereich, durch Rohre mit verbesserter Sperrwirkung ersetzt werden müssen.

Derartige Rohre sollen aber nicht nur eine hervorragende Sperrwirkung gegen Diffusion von chemischen Agenzien zeigen, die im Inneren durch das Rohr gefördert werden, sondern auch gegen chemische Agenzien, Lösemittel, wäßrige Salzlösungen u.a., die von außen durch die Rohrwand in die im Rohr transportierten Flüssigkeiten eindringen können. Dies gilt beispielsweise für Trinkwasserleitungen, die in kontaminiertem oder schadstoffbelastetem Erdreich verlegt werden.

Aus der EP-A- 0 686 797 sind mehrschichtige Kunststoffrohre bekannt, die folgende Schichten enthalten:
- Mindestens eine Schicht auf Basis eines Polyolefins,
- mindestens eine Schicht auf Basis eines thermoplastischen Polyesters, verbunden über
- eine dazwischenliegende Schicht aus einem geeigneten Haftvermittler, der reaktive Gruppen enthält,
wobei benachbarte Schichten miteinander kohäsiv verbunden sind und der Polyester modifiziert sein kann durch Zusatz einer Verbindung mit zwei oder mehr Epoxidgruppen, einer Verbindung mit zwei oder mehr Oxazolingruppen oder einer Verbindung mit zwei oder mehr Isocyanatgruppen.

Bei diesem Stand der Technik besitzt allerdings der modifizierte Polyester ein sehr enges Verarbeitungsfenster. Grund hierfür ist der schwer unter Kontrolle zu haltende Molekulargewichtsaufbau durch Kettenverlängerung. Hierbei steigt die Schmelzeviskosität stark an; will man die Verarbeitbarkeit als Reaktion darauf durch Temperaturerhöhung verbessern, so gerät man schnell in Bereiche, in denen der Polyester thermisch geschädigt wird. Zusätzlich hat sich erwiesen, daß in manchen Fällen die Schichtenhaftung noch nicht ausreicht.

Hinzu kommt, dass die in der EP-A-0 686 797 offenbarten Modifizierungsmittel eine relativ hohe Flüchtigkeit besitzen. Wegen der hohen Aggressivität, insbesondere der Isocyanate, kann die damit modifizierte Polyesterformmasse nur nach sehr aufwendiger Kapselung des Kneters hergestellt werden. Auch bei der anschließenden Verarbeitung ist das Gefährdungspotential für den Maschinenfahrer noch erheblich.

Aufgabe der vorliegenden Erfindung war daher, Polyolefinrohre mit einer Polyestersperrschicht herzustellen, wobei eine feste Schichtenhaftung vorliegt und hierzu der Polyester in der Weise modifiziert wird, dass das Compound mit den üblichen Sicherheitseinrichtungen, wie etwa einer Punktabsaugung, hergestellt und weiterverarbeitet werden kann.

Diese Aufgabe wurde durch ein mehrschichtiges Kunststoffrohr gelöst, das folgende Schichten enthält:
I. Mindestens eine Schicht aus einer Polyolefin-Formmasse,
II. mindestens eine Schicht aus einer Polyester-Formmasse, die eine oder mehrere Verbindungen enthält, welche ausgewählt sind aus
   a) einer Verbindung mit zwei oder mehr Carbodiimid-Gruppen,
   b) einer Verbindung mit zwei oder mehr Carbonsäureanhydridgruppen,
   c) einer Verbindung mit zwei oder mehr Maleinimidgruppen,
   d) einer Verbindung mit zwei oder mehr Oxazingruppen,
   sowie
III. mindestens eine zwischen I und II liegende Schicht aus einem Haftvermittler, der reaktive Gruppen enthält.

Die Polyester-Formmasse enthält vorzugsweise 0,1 bis 15 Gew.-% der Verbindung unter a) bis d), bevorzugt 0,25 bis 10 Gew.-% und besonders bevorzugt 0,5 bis 5 Gew.-%.

Die Schicht I besteht aus einer Formmasse auf Basis von Polyolefinen. Geeignet sind Homopolymere und Copolymere auf Basis u. a. von Ethylen, Propylen, 1-Buten, 1-Hexen und 1-Octen. Weiterhin geeignet sind Copolymere und Terpolymere, die zusätzlich zu den obengenannten Monomeren weitere Monomere, insbesondere Diene, enthalten, wie beispielsweise Ethylidennorbornen, Cyclopentadien oder Butadien. Bevorzugt sind Formmassen auf Basis von Polypropylen oder Polyethylen.

Die Formmasse für die Schicht I kann entsprechend dem Stand der Technik vernetzt werden, um so eine Verbesserung der mechanischen Eigenschaften, z.B. der Kälteschlagzähigkeit und der Wärmeformbeständigkeit, zu erzielen. Die Vernetzung erfolgt beispielsweise durch Strahlenvernetzung oder mittels Feuchtevernetzung von silanhaltigen Polyolefinformmassen.

Der thermoplastische Polyester der Schicht II weist nachstehende Grundstruktur auf: 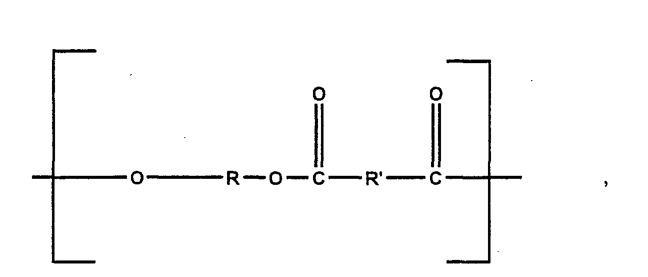 dabei stellt R einen divalenten verzweigten oder nichtverzweigten aliphatischen und/oder cycloaliphatischen Rest mit 2 bis 12, vorzugsweise 2 bis 8 C-Atomen in der Kohlenstoffkette und R' einen divalenten aromatischen Rest mit 6 bis 20, vorzugsweise 8 bis 12, C-Atomen im Kohlenstoffgerüst dar.

Als Beispiele für die bei der Herstellung einzusetzenden Diole seien Ethylenglykol, Trimethylenglykol, Tetramethylenglykol, Hexamethylenglykol, Neopentylglykol, Cyclohexandimethanol o.ä. genannt.

Bis zu 25 Mol-% des genannten Diols können durch ein Diol mit nachstehender allgemeiner Formel 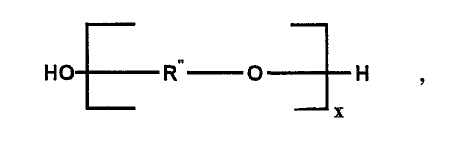 wobei R" einen zweiwertigen Rest mit 2 bis 4 C-Atomen bedeutet und x einen Wert von 2 bis 50 annehmen kann, ersetzt sein.

Bevorzugt als Diole werden Ethylenglykol und Tetramethylenglykol eingesetzt.

Als bei der Herstellung einzusetzende aromatische Dicarbonsäure kommen z.B. Terephthalsäure, Isophthalsäure, 1.4-, 1.5-, 2.6- bzw. 2.7-Naphthalindicarbonsäure, Diphensäure, Diphenylether-4.4'-dicarbonsäure oder deren polyesterbildende Derivate, wie z.B. Dimethylester, in Frage.

Bis zu 20 Mol-% dieser Dicarbonsäuren können durch aliphatische Dicarbonsäuren, wie z.B. Bernsteinsäure, Maleinsäure, Fumarsäure, Sebacinsäure, Dodecandisäure u.a. ersetzt sein.

Die Herstellung der thermoplastischen Polyester gehört zum Stand der Technik (DE-OSS 24 07 155, 24 07 156; Ullmanns Encyclopädie der technischen Chemie, 4. Auflage, Band 19, Seite 65 ff, Verlag Chemie GmbH, Weinheim 1980).

Die erfindungsgemäß eingesetzten Polyester weisen eine Viskositätszahl (J-Wert) im Bereich von 80 bis 240 cm³/g auf.

Bevorzugte thermoplastische Polyester sind Polyethylenterephthalat, Polypropylenterephthalat, Polybutylenterephthalat, Polyethylennaphthalat, Polypropylennaphthalat und Polybutylennaphthalat.

Sofern erforderlich, können die Polyester auf übliche Weise schlagzäh eingestellt werden.

Beispielsweise können 0,5 bis 40 Gew.-%, bevorzugt 5 bis 35 Gew.-% eines bekannten Schlagzähmodifiers zugesetzt werden. Es handelt sich hierbei in der Regel um Kautschuke, die gegebenenfalls funktionalisiert sein können, oder um Polyester-Polyalkylenglykol-Blockcopolymere.

Den Formmassen für die Schichten gemäß I sowie II können übliche Hilfs- und Zusatzstoffe wie z.B. Flammschutzmittel, Stabilisatoren, Weichmacher, Verarbeitungshilfsmittel, Viskositätsverbesserer, Füllstoffe, insbesondere solche zur Verbesserung der Leitfähigkeit, Pigmente o.ä. zugefügt werden.

Als Verbindung mit zwei oder mehr Carbodiimid-Gruppen können beispielsweise Verbindungen der Art 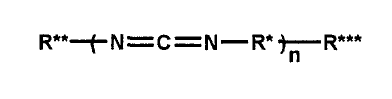 mit n gleich mindestens 2 verwendet werden, wobei R^{*} ein aliphatischer, cycloaliphatischer, aromatischer oder araliphatischer Rest mit 2 bis 22 C-Atomen sein kann und R^{**} sowie R^{***} jede beliebige, in der Regel herstellungsbedingte Gruppe ist, mit der die Kettenlänge begrenzt wird.

Als Verbindung mit zwei oder mehr Carbonsäureanhydridgruppen können beispielsweise Butan-1.2.3.4-tetracarbonsäuredianhydrid, Pyromellitsäuredianhydrid, Ester aus Diolen und Trimellitsäureanhydrid, Additionsprodukte aus Polybutadienöl und Maleinsäureanhydrid oder Perylen-3,4,9,10-tetracarbonsäuredianhydrid eingesetzt werden.

Als Verbindung mit zwei oder mehr Maleinimidgruppen können beispielsweise folgende Verbindungen eingesetzt werden: 1,3-Phenylen-bismaleinimid, 1,4-Phenylenbismaleinimid, 3-Methyl-1,4-phenylen-bismaleinimid, 5-Methyl-1,3-phenylen-bismaleinimid, 4,4'-(N,N'-Bismaleinimido)-diphenylmethan, 2,4-Bismaleinimidotoluol, 3,3'-(N,N'-Bismaleinimido)-diphenylmethan, 3,3'-(N,N'-Bismaleinimido)-diphenylsulfon, 4,4'-(N,N'-Bismaleinimido)-diphenylsulfon, 1,2-Ethylen-bismaleinimid, 1,3-Propylen-bismaleinimid, 1,4-Butylen-bismaleinimid, 1,10-Decen-bismaleinimid, 1,12-Dodecen-bismaleinimid und 1,3-Bis(citraconimidomethyl)benzol. Die Maleinimidgruppen können an der Doppelbindung gegebenenfalls durch eine oder zwei Alkylgruppen mit jeweils 1 bis 4 C-Atomen substituiert sein.

Als Verbindung mit zwei oder mehr Oxazingruppen werden beispielsweise Verbindungen der Art 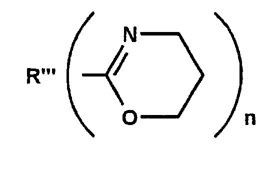 eingesetzt mit n gleich mindestens 2, wobei R"' ein aliphatischer, cycloaliphatischer, aromatischer oder araliphatischer Rest mit 2 bis 22 C-Atomen sein kann.

Als Haftvermittler der Schicht III sind Formmassen geeignet, die bei der Herstellung der mehrschichtigen Rohre durch Coextrusion mit den benachbarten Schichten I und II einen festen Verbund ergeben, so dass die Schichten im fertigen Rohr mechanisch möglichst nicht mehr voneinander getrennt werden können.

Die Formmassen für die geeigneten Haftvermittler bestehen aus einer Polymerbasis, insbesondere von Polyolefinen, die mit geeigneten reaktiven Gruppen modifiziert ist. Die reaktiven Gruppen können hierbei entweder durch Copolymerisation oder durch eine Pfropfreaktion eingebracht werden. Bei der Pfropfreaktion wird beispielsweise ein vorgebildetes Polyolefin auf bekannte Weise mit einem ungesättigten, funktionellen Monomeren und vorteilhafterweise einem Radikalspender bei erhöhter Temperatur umgesetzt.

Als reaktive Gruppen geeignet sind z. B. Säureanhydridgruppen, N-Acyllactamgruppen, Carbonsäuregruppen, Epoxidgruppen, Oxazolingruppen, Trialkoxysilangruppen oder Hydroxylgruppen.

Die Auswahl der geeigneten Basis hängt von der Zusammensetzung der Schicht I auf Basis eines Polyolefins ab: Die Basis des Haftvermittlers sollte so gewählt werden, dass der Haftvermittler mit der polyolefinischen Schicht I möglichst gut verträglich, bevorzugt mischbar, ist. Besteht die Schicht I aus einer Formmasse auf Basis von Polypropylen, so ist Polypropylen auch als Basis für den Haftvermittler geeignet.

Im bevorzugten Fall besteht die Schicht I aus einer Formmasse auf Basis von Polyethylen. In diesem Fall haben sich unter anderem Ethylen-Methylmethacrylat-Maleinsäureanhydrid-Copolymere und besonders bevorzugt Ethylen-Vinylacetat-Maleinsäureanhydrid-Copolymere als besonders gut geeignete Haftvermittler herausgestellt.

Geeignete funktionalisierte Polyethylene und Polypropylene sind erhältlich u.a. unter den Handelsnamen BYNEL (DuPont), PRIMACOR (Dow), POLYBOND (BP), OREVAC (Elf), HERCOPRIME (Hercules), EPOLENE (Eastman), HOSTAMONT, EXXELOR (Exxon) und ADMER (Mitsui Petrochemical).

Die erfindungsgemäßen, mehrschichtigen Rohre können die Schichten I, II und III mehrmals enthalten. Hierbei sind die Schichten so anzuordnen, dass die Schichten I und II immer über eine dazwischenliegende Schicht III miteinander verbunden sind.

Beispiele für mögliche Schichtenanordnungen zeigt die folgende Tabelle.

**Tabelle 1:**

| Schichtenanordnung von erfindungsgemäßen, mehrschichtigen Kunststoffrohren (Aufbau von außen nach innen) | |
|---|---|
| Schichtenanordnung Nr. | Ausführung |
| 1 | Schicht I |
| | Schicht III |
| | Schicht II |
| 2 | Schicht II |
| | Schicht III |
| | Schicht I |
| 3 | Schicht I |
| | Schicht III |
| | Schicht II |
| | Schicht III |
| | Schicht I |
| 4 | Schicht II |
| | Schicht III |
| | Schicht I |
| | Schicht III |
| | Schicht II |

Bevorzugt sind mehrschichtige Rohre, bei denen die Dicke der Schicht II 1 bis 50 %, bevorzugt 5 bis 20 %, der gesamten Wandstärke ausmacht.

Die Dicke der Schicht III liegt bevorzugt zwischen 0,05 und 20 %, besonders bevorzugt zwischen 0,4 und 4 % der gesamten Wandstärke. Die gesamte Wandstärke ist hierbei die Summe der einzelnen Schichtdicken und ist gleich der Wandstärke des Rohres.

Die Herstellung der mehrschichtigen Rohre erfolgt vorzugsweise mittels Coextrusion, jedoch sind auch andere Herstellungsverfahren wie Extrusionsbeschichtung oder Spritzgießen möglich. Die Rohre können ganz oder teilweise gewellt sein.

Die erfindungsgemäßen, mehrschichtigen Rohre weisen in hervorragendem Maße eine gute Beständigkeit sowie Sperrwirkung gegen Diffusion von chemischen Agenzien, Lösemitteln und Kraftstoffen, insbesondere auch methanolhaltigen Kraftstoffen, auf. Ferner sind die Schichten kohäsiv miteinander verbunden, so dass z.B. bei thermischer Ausdehnung, Biegen oder Thermoformen des mehrschichtigen Rohres kein Abscheren der verschiedenen Schichten voneinander auftritt. Diese gute Schichtenhaftung bleibt auch bei längerem Kontakt mit Kraftstoffen, insbesondere auch methanolhaltigen Kraftstoffen, erhalten.

Bevorzugt eingesetzt werden die erfindungsgemäßen Kunststoffrohre zum Transport chemischer, insbesondere petrochemischer, Stoffe und zum Durchleiten von Brems-, Kühl- und Hydraulikflüssigkeiten sowie Kraftstoff, insbesondere auch methanolhaltigem und ethanolhaltigem Kraftstoff.

Die Rohre sind insbesondere geeignet, im Tankstellenbereich und ähnlichen Bereichen über- und untererdig verlegt zu werden, um (petro)chemische Stoffe, insbesondere Kraftstoff, durch sie zu befördern.

Die Rohre sind auch geeignet, im Kraftfahrzeugsektor zum Durchleiten von Kraftstoffen, insbesondere methanolhaltigen Kraftstoffen, verwendet zu werden.

Weiterhin eignen sich die Rohre auch für Trinkwasserleitungen, die in schadstoffbelastetem Erdreich verlegt werden.

Eine weitere Verwendung der erfindungsgemäßen mehrschichtigen Rohre besteht darin, dass, beispielsweise durch Blasformen, aus ihnen Hohlkörper wie Tankbehälter oder Einfüllstutzen, insbesondere für den Kraftfahrzeugsektor, hergestellt werden.

Bei der Verwendung des erfindungsgemäßen Mehrschichtrohres zur Leitung oder Bevorratung von brennbaren Flüssigkeiten, Gasen oder Stäuben, wie z. B. Kraftstoff oder Kraftstoffdämpfen, empfiehlt es sich, eine der zum Verbund gehörenden Schichten oder eine zusätzliche Innenschicht elektrisch leitfähig auszurüsten. Dies kann durch Compoundieren mit einem elektrisch leitfähigen Zusatz nach allen Methoden des Standes der Technik geschehen. Als leitfähiger Zusatz können beispielsweise Leitruß, Metallflitter, Metallpulver, metallisierte Glaskugeln, metallisierte Glasfasern, Metallfasern (beispielsweise aus rostfreiem Stahl), metallisierte Whiskers, Kohlefasern (auch metallisiert), intrinsisch leitfähige Polymere oder Graphitfibrillen verwendet werden. Es können auch Mischungen verschiedener leitfähiger Zusätze eingesetzt werden.

Im bevorzugten Fall befindet sich die elektrisch leitfähige Schicht in direktem Kontakt mit dem zu führenden oder zu bevorratenden Medium und besitzt einen Oberflächenwiderstand von maximal 10⁹ Ω cm.

In einer Ausführung des erfindungsgemäßen Mehrschichtrohres kann dieses noch mit einer zusätzlichen Elastomerschicht ummantelt sein. Zur Ummantelung eignen sich sowohl vernetzende Kautschukmassen als auch thermoplastische Elastomere. Die Ummantelung kann sowohl mit als auch ohne Verwendung eines zusätzlichen Haftvermittlers auf das Rohr aufgebracht werden, beispielsweise mittels Extrusion über einen Querspritzkopf oder dadurch, dass ein vorgefertigter Elastomerschlauch über das fertig extrudierte Mehrschichtrohr geschoben wird.

Die Erfindung soll im Folgenden beispielhaft erläutert werden.

In den Versuchen wurden folgende Komponenten verwendet:
Polyolefin der Schicht I:
   - PO 1:: STAMYLAN HD 9630, ein Polyethylen hoher Dichte (HDPE) der DSM Polyethylenes BV
Polyester der Schicht II:
   - PES 1:: Mischung aus
   a) 98 Gew.-% Polybutylenterephthalat (VESTODUR 2000 der DEGUSSA-HÜLS AG) und
   b) 2 Gew.-% PERKALINK 900 [1,3-Bis(citraconimidomethyl)benzol].
   - PES 2:: Mischung aus
   a) 98 Gew.-% Polybutylenterephthalat (VESTODUR 2000 der DEGUSSA-HÜLS AG) und
   b) 2 Gew.-% einer Mischung bestehend aus
      b1) 50 Gew.-% PERKALINK 900 [1,3-Bis(citraconimidomethyl)-benzol] und
      b2) 50 Gew.-% HVA 2 (N,N'-m-Phenylendimaleinimid).
   - PES 3: (nicht erfindungsgemäß): Polybutylenterephthalat (VESTODUR 2000 der DEGUSSA-HÜLS AG)
Haftvermittler der Schicht III:
   - HV 1:: Formmasse auf der Basis von Polyethylen (LDPE), modifiziert mit Maleinsäureanhydrid, so dass die Formmasse 0,4 Gew.-% Anhydridgruppen enthält.
   - HV 2:: Formmasse auf der Basis von Ethylen-Vinylacetat-Copolymer, modifiziert mit Maleinsäureanhydrid, so dass die Formmasse 0,1 Gew.-% Anhydridgruppen enthält.
   - HV3:: Formmasse auf der Basis von Ethylen-Acrylat-Copolymer, modifiziert mit Maleinsäureanhydrid, so dass die Formmasse 0,1 Gew.-% Anhydridgruppen enthält.

Zur Überprüfung der Schichtenhaftung wurde eine Dreischicht-Bändchencoextrusion durchgeführt. Hierfür wurde ein Bändchencoextrusionswerkzeug verwendet mit einer Austrittsbreite von 30 mm, wobei die Zusammenführung der verschiedenen Schmelzen im Werkzeug kurz vor dem Austritt der Schmelze aus dem Werkzeug erfolgte.

Das Werkzeug wurde von drei Storck 25-Extrudern gespeist.

Nach dem Austritt aus dem Werkzeug wurde der Dreischichtverbund auf eine Kühlwalze aufgelegt und abgezogen (Chill-Roll-Verfahren).

Die Haftungsergebnisse der Dreischicht-Bändchencoextrusion sind in der Tabelle 1 zusammengefasst. Die dort angegebenen Haftungsnoten bedeuten:
- 0: keine Haftung
- 1: geringfügige Haftung
- 2: etwas Haftung; mit geringem Aufwand zu trennen
- 3: gute Haftung; nur mit großem Aufwand und gegebenenfalls mit Hilfe von Werkzeugen zu trennen
- 4: untrennbare Haftung

**Tabelle 1**

| Beispiel | Schicht I | Haftvermittler (Schicht III) | Schicht II | Haftung | |
|---|---|---|---|---|---|
| | | | | Grenzfläche Schicht I/Schicht III | Grenzfläche Schicht III/Schicht II |
| 1 | PO 1 | HV 1 | PES 1 | 4 | 3 |
| 2 | PO 1 | HV 1 | PES 2 | 4 | 3 |
| 3*) | PO 1 | HV 1 | PES 3 | 4 | 0 |
| 4 | PO 1 | HV 2 | PES 1 | 4 | 4 |
| 5 | PO 1 | HV 2 | PES 2 | 4 | 4 |
| 6*) | PO 1 | HV 2 | PES 3 | 4 | 0 |
| 7 | PO 1 | HV 3 | PES 1 | 4 | 4 |
| 8 | PO 1 | HV 3 | PES 2 | 4 | 4 |
| 9*) | PO 1 | HV 3 | PES 3 | 4 | 0 |

| | | | | | |
|---|---|---|---|---|---|
| *) nicht erfindungsgemäß | | | | | |

Die in diesen Vorversuchen erhaltenen Ergebnisse wurden anschließend durch die Extrusion entsprechender Dreischichtrohre überprüft. Hierbei wurden diese Ergebnisse bestätigt.

## Patentansprüche

1. Mehrschichtiges Kunststoffrohr,
dadurch gekennzeichnet,
dass es folgende Schichten enthält:
I. Mindestens eine Schicht I aus einer Polyolefin-Formmasse,
II. mindestens eine Schicht II aus einer Polyester-Formmasse
sowie
III. mindestens eine zwischen I und II liegende Schicht III aus einem Haftvermittler, der reaktive Gruppen enthält,
dadurch gekennzeichnet,
dass die Polyester-Formmasse der Schicht II eine oder mehrere Verbindungen enthält, welche ausgewählt sind aus
a) einer Verbindung mit zwei oder mehr Carbodiimid-Gruppen,
b) einer Verbindung mit zwei oder mehr Carbonsäureanhydridgruppen,
c) einer Verbindung mit zwei oder mehr Maleinimidgruppen
d) einer Verbindung mit zwei oder mehr Oxazingruppen.

2. Mehrschichtiges Kunststoffrohr gemäß Anspruch 1,
dadurch gekennzeichnet,
dass der Polyester der Schicht II ausgewählt ist aus Polyethylenterephthalat, Polypropylenterephthalat, Polybutylenterephthalat, Polyethylennaphthalat, Polypropylennaphthalat und Polybutylennaphthalat.

3. Mehrschichtiges Kunststoffrohr gemäß einem der vorhergehenden Ansprüche,
dadurch gekennzeichnet,
dass das Polyolefin der Schicht I ausgewählt ist aus Polyethylen und Polypropylen.

4. Mehrschichtiges Kunststoffrohr gemäß einem der vorhergehenden Ansprüche, welches ganz oder teilweise gewellt ist.

5. Mehrschichtiges Kunststoffrohr gemäß einem der vorhergehenden Ansprüche, bei dem eine der zum Verbund gehörenden Schichten oder eine zusätzliche Innenschicht elektrisch leitfähig ausgerüstet ist.

6. Mehrschichtiges Kunststoffrohr gemäß einem der vorhergehenden Ansprüche, hergestellt durch Coextrusion, Extrusionsbeschichtung oder Spritzgießen.

7. Mehrschichtiges Kunststoffrohr gemäß einem der vorhergehenden Ansprüche als Leitung für Kraftstoffe oder deren Dämpfe.

8. Mehrschichtiges Kunststoffrohr gemäß einem der Ansprüche 1 bis 4 als Leitung für Brems-, Kühl- oder Hydraulikflüssigkeit.

9. Mehrschichtiges Kunststoffrohr gemäß einem der Ansprüche 1 bis 3 für den Transport von Kraftstoff im Tankstellenbereich oder als Trinkwasserleitung.

10. Hohlkörper, hergestellt aus einem mehrschichtigen Kraftstoffrohr gemäß einem der Ansprüche 1 bis 3.

11. Hohlkörper gemäß Anspruch 10 als Tankbehälter oder Einfüllstutzen.

12. Hohlkörper gemäß einem der Ansprüche 10 und 11, hergestellt durch Blasformen.
